# EUROPEAN PATENT APPLICATION

(11) **EP 4 797 820 A1**
(43) Date of publication of application: **26.08.2026**
(21) Application number: 24884494.6
(22) Date of filing: 21.10.2024
(51) Int. Cl.: H04W 64/00

(54) **COMMUNICATION METHOD AND APPARATUS**

(30) Priority: 03.11.2023 CN 202311462388
(71) Applicant: HUAWEI TECHNOLOGIES CO., LTD., Shenzhen 518129 (CN)
(72) Inventor: ZHANG, Heng, Shenzhen, Guangdong 518129 (CN); HUANG, Su, Shenzhen, Guangdong 518129 (CN); LI, Cheng, Shenzhen, Guangdong 518129 (CN)
(74) Representative: Goddar, Heinz J.
(86) International application number: PCT/CN2024/126209
(87) International publication number: WO 2025/092490

(57) **Abstract**

This application provides a communication method and apparatus to improve positioning accuracy. A first base station receives a frequency-hopping positioning reference signal from a terminal device, and determines first channel measurement information based on the frequency-hopping positioning reference signal. A first apparatus receives the first channel measurement information from the first base station, and determines second channel measurement information. The second channel measurement information is determined based on the frequency-hopping positioning reference signal received by a second base station from the terminal device. The first apparatus determines a time difference of arrival between the frequency-hopping reference signal to the first base station and the frequency-hopping reference signal to the second base station based on the first channel measurement information and the second channel measurement information. The time difference of arrival is used to position the terminal device. The first apparatus determines the time difference of arrival between the frequency-hopping reference signal to the first base station and the frequency-hopping reference signal to the second base station based on the first channel measurement information and the second channel measurement information. This can eliminate a phase error caused by the frequency-hopping positioning reference signal of the terminal device, thereby ensuring positioning accuracy.

## Description

### ● CROSS-REFERENCE TO RELATED APPLICATIONS

This application claims priority to Chinese Patent Application No. 202311462388.2, filed with the China National Intellectual Property Administration on November 3, 2023 and entitled "COMMUNICATION METHOD AND APPARATUS", which is incorporated herein by reference in its entirety.

### ● TECHNICAL FIELD

This application relates to the field of communication technologies, and in particular, to a communication method and apparatus.

### ● BACKGROUND

In a terminal device positioning scenario, a basic condition is that a terminal device needs to send a positioning reference signal to a plurality of base stations, and the plurality of base stations measure the positioning reference signal to obtain time of arrival (time of arrival, TOA) at which the positioning reference signal arrives at the base stations, and obtain a time difference of arrival (time difference of arrival, TDOA) between different base stations. Then, positioning of the terminal device can be completed based on the TDOA. Therefore, it may be learned that positioning accuracy is positively correlated with TOA measurement accuracy.

Currently, in some studies, it is learned that the TOA measurement accuracy is positively correlated with a bandwidth of the positioning reference signal. In other words, a larger bandwidth of the positioning reference signal indicates higher TOA measurement accuracy. Therefore, in some scenarios with a small bandwidth, for example, a passive internet of things scenario, a bandwidth corresponding to the positioning reference signal may be increased to improve positioning accuracy. For example, a method for increasing the bandwidth of the positioning reference signal is to send the positioning reference signal on different frequency domain resources on different time domain symbols, and splice channels in different frequency domains that are obtained based on the positioning reference signal and channel estimation and are on the different time domain symbols. In this way, small-bandwidth signals on a plurality of time domain symbols are spliced into a large-bandwidth signal, to improve positioning accuracy.

However, due to a limitation of a hardware capability of the terminal device in a scenario such as the passive internet of things scenario, it cannot be ensured that initial phases of clocks are consistent each time when the positioning reference signal is sent through frequency hopping. As a result, an error may exist in a spliced channel, which may reduce positioning accuracy.

### ● SUMMARY

Embodiments of this application provide a communication method and apparatus, to improve positioning accuracy.

According to a first aspect, this application provides a communication method. The method may include: A first base station receives a frequency-hopping positioning reference signal from a terminal device, and determines first channel measurement information based on the frequency-hopping positioning reference signal; then, the first base station sends the first channel measurement information to a first apparatus; the first apparatus determines second channel measurement information, where the second channel measurement information is determined based on the frequency-hopping positioning reference signal received by the second base station from the terminal device; and the first apparatus determines a time difference of arrival between the frequency-hopping reference signal to the first base station and the frequency-hopping reference signal to the second base station based on the first channel measurement information and the second channel measurement information. The time difference of arrival is used to position the terminal device. The first base station is a positioning reference base station.

Through the foregoing method, the first apparatus determines the time difference of arrival between the frequency-hopping reference signal to the first base station and the frequency-hopping reference signal to the second base station based on the first channel measurement information and the second channel measurement information. This can eliminate a phase error caused by the frequency-hopping positioning reference signal of the terminal device, thereby ensuring positioning accuracy.

In a possible design, the first channel measurement information is channel measurement information of a first channel, and the first channel is a channel between the terminal device and the first base station. The second channel measurement information is channel measurement information of a second channel, and the second channel is a channel between the terminal device and the second base station.

In a possible design, that the first apparatus determines the time difference of arrival between the frequency-hopping reference signal to the first base station and the frequency-hopping reference signal to the second base station based on the first channel measurement information and the second channel measurement information includes: The first apparatus determines an inter-channel phase difference between the first base station and the second base station based on the first channel measurement information and the second channel measurement information; and the first apparatus determines the time difference of arrival between the frequency-hopping reference signal to the first base station and the frequency-hopping reference signal to the second base station based on the inter-channel phase difference between the first base station and the second base station. In this way, the first apparatus determines the time difference of arrival between the frequency-hopping reference signal to the first base station and the frequency-hopping reference signal to the second base station by using the inter-channel phase difference between the first base station and the second base station. This can eliminate the phase error caused by the frequency-hopping positioning reference signal of the terminal device, thereby ensuring positioning accuracy.

In a possible design, the first apparatus may be the second base station. A method for sending the first channel measurement information to the first apparatus by the first base station may be: The first base station directly sends the first channel measurement information to the second base station; or the first base station sends the first channel measurement information to the second base station through a location server. Correspondingly, a method for determining the second channel measurement information by the first apparatus may be: The second base station receives the frequency-hopping positioning reference signal from the terminal device, and determines the second channel measurement information based on the frequency-hopping positioning reference signal. In this way, in a scenario in which the first apparatus is the second base station, the second base station can accurately obtain the channel measurement information corresponding to each of the first base station and the second base station.

In a possible design, the second base station sends the time difference of arrival to the location server, and the location server receives the time difference of arrival from the second base station. In this way, in the scenario in which the first apparatus is the second base station, the second base station can report the time difference of arrival to the location server, so that the location server can perform positioning of the terminal device based on a positioning time difference.

In a possible design, the location server sends configuration information of the frequency-hopping positioning reference signal to the second base station. Correspondingly, the second base station receives the configuration information of the frequency-hopping positioning reference signal from the location server. In the scenario in which the first apparatus is the second base station, the second base station may obtain the configuration information of the frequency-hopping positioning reference signal from the location server.

In a possible design, the location server sends a measurement request to the second base station. The measurement request indicates the first apparatus to perform a positioning measurement based on the frequency-hopping positioning reference signal. Correspondingly, the second base station receives the measurement request from the location server. In this way, in the scenario in which the first apparatus is the second base station, the second base station can subsequently perform the positioning measurement based on the measurement request.

In a possible design, the first apparatus may be a location server, and a method for determining the second channel measurement information by the first apparatus may be: The location server receives the second channel measurement information from the second base station. In this way, the location server can accurately obtain the second channel measurement information.

In a possible design, the location server sends configuration information of the frequency-hopping positioning reference signal to the first base station and the second base station. Correspondingly, the first base station and the second base station receive the configuration information of the frequency-hopping positioning reference signal from the location server. In this way, in a scenario in which the first apparatus is the location server, the first base station and the second base station can accurately obtain the configuration information of the frequency-hopping positioning reference signal.

In a possible design, the location server sends a measurement request to the first base station and the second base station. The measurement request indicates the first base station and the second base station to separately perform a positioning measurement based on the frequency-hopping positioning reference signal. Correspondingly, the first base station and the second base station receive the measurement request from the location server. In this way, in the scenario in which the first apparatus is the location server, the first base station and the second base station can subsequently perform the positioning measurement based on the measurement request.

In a possible design, the configuration information of the frequency-hopping positioning reference signal may include at least one of the following: a frequency hopping interval, a bandwidth corresponding to the positioning reference signal in a frequency hop, a frequency hopping period, or a quantity of frequency hops.

In a possible design, the first channel measurement information may include at least one of the following: a frequency domain estimate of the first channel, a time domain estimate of the first channel, or a phase estimate of the first channel. The second channel measurement information may include at least one of the following: a frequency domain estimate of the second channel, a time domain estimate of the second channel, or a phase estimate of the second channel.

In a possible design, the inter-channel phase difference may be a product of the frequency domain estimate of the first channel and a conjugate of the frequency domain estimate of the second channel; or the inter-channel phase difference may be a ratio of the frequency domain estimate of the first channel to the frequency domain estimate of the second channel; or the inter-channel phase difference may be a convolution of the time domain estimate of the first channel and the time domain estimate of the second channel; or the inter-channel phase difference may be a correlation sequence of the time domain estimate of the first channel and the time domain estimate of the second channel; or the inter-channel phase difference may be a difference between the phase estimate of the first channel and the phase estimate of the second channel. In this way, the inter-channel phase difference can be flexibly determined in a plurality of manners.

According to a second aspect, this application further provides a communication apparatus. The communication apparatus may be used in a first apparatus or a module (for example, a processor, a chip, or a chip system) in the first apparatus. The communication apparatus may include a processing unit. The processing unit is configured to perform the following operations: determining first channel measurement information and second channel measurement information, where a first base station is a positioning reference base station, the first channel measurement information is determined based on a frequency-hopping positioning reference signal received by the first base station from a terminal device, and the second channel measurement information is determined based on the frequency-hopping positioning reference signal received by a second base station from the terminal device; and determining a time difference of arrival between the frequency-hopping reference signal to the first base station and the frequency-hopping reference signal to the second base station based on the first channel measurement information and the second channel measurement information, where the time difference of arrival is used to position the terminal device.

In a possible design, the first channel measurement information is channel measurement information of a first channel, and the first channel is a channel between the terminal device and the first base station. The second channel measurement information is channel measurement information of a second channel, and the second channel is a channel between the terminal device and the second base station.

In a possible design, when determining the time difference of arrival between the frequency-hopping reference signal to the first base station and the frequency-hopping reference signal to the second base station based on the first channel measurement information and the second channel measurement information, the processing unit may be configured to: determine an inter-channel phase difference between the first base station and the second base station based on the first channel measurement information and the second channel measurement information, and determine the time difference of arrival between the frequency-hopping reference signal to the first base station and the frequency-hopping reference signal to the second base station based on the inter-channel phase difference between the first base station and the second base station.

In a possible design, the communication apparatus may be the second base station. The second base station may include a transceiver unit, and the transceiver unit is configured to perform communication. When determining the first channel measurement information, the processing unit may be configured to: control the transceiver unit to receive the first channel measurement information from the first base station; or control the transceiver unit to receive the first channel measurement information from a location server, and the first channel measurement information is from the first base station. When determining the second channel measurement information, the processing unit may be configured to: control the transceiver unit to receive the frequency-hopping positioning reference signal from the terminal device; and determine the second channel measurement information based on the frequency-hopping positioning reference signal.

In a possible design, the transceiver unit may be further configured to send the time difference of arrival to the location server.

In a possible design, the transceiver unit may be further configured to receive configuration information of the frequency-hopping positioning reference signal from the location server.

In a possible design, the transceiver unit may be further configured to receive a measurement request from the location server. The measurement request indicates the first apparatus to perform a positioning measurement based on the frequency-hopping positioning reference signal.

In a possible design, the communication apparatus may be a location server. The location server further includes a transceiver unit, and the transceiver unit is configured to perform communication. When determining the first channel measurement information and the second channel measurement information, the processing unit may be configured to: control the transceiver unit to receive the first channel measurement information from the first base station, and receive the second channel measurement information from the second base station.

In a possible design, the transceiver unit may be further configured to send configuration information of the frequency-hopping positioning reference signal to the first base station and the second base station.

In a possible design, the transceiver unit may be further configured to send a measurement request to the first base station and the second base station. The measurement request indicates the first base station and the second base station to perform a positioning measurement based on the frequency-hopping positioning reference signal.

In a possible design, the configuration information of the frequency-hopping positioning reference signal may include at least one of the following: a frequency hopping interval, a bandwidth corresponding to the positioning reference signal in a frequency hop, a frequency hopping period, or a quantity of frequency hops.

In a possible design, the first channel measurement information may include at least one of the following: a frequency domain estimate of the first channel, a time domain estimate of the first channel, or a phase estimate of the first channel. The second channel measurement information may include at least one of the following: a frequency domain estimate of the second channel, a time domain estimate of the second channel, or a phase estimate of the second channel.

In a possible design, the inter-channel phase difference is a product of the frequency domain estimate of the first channel and a conjugate of the frequency domain estimate of the second channel; or the inter-channel phase difference is a ratio of the frequency domain estimate of the first channel to the frequency domain estimate of the second channel; or the inter-channel phase difference is a convolution of the time domain estimate of the first channel and the time domain estimate of the second channel; or the inter-channel phase difference is a correlation sequence of the time domain estimate of the first channel and the time domain estimate of the second channel; or the inter-channel phase difference is a difference between the phase estimate of the first channel and the phase estimate of the second channel.

According to a third aspect, this application further provides a communication apparatus. The communication apparatus may be used in a first base station or a module (for example, a processor, a chip, or a chip system) in the first base station. The communication apparatus may include a transceiver unit and a processing unit. The transceiver unit is configured to receive a frequency-hopping positioning reference signal from a terminal device. The first base station is a positioning reference base station. The processing unit is configured to determine first channel measurement information based on the frequency-hopping positioning reference signal. The transceiver unit is further configured to send the first channel measurement information to a second base station or a location server. The first channel measurement information is used to determine a time difference of arrival between the frequency-hopping positioning reference signal to the first base station and the frequency-hopping positioning reference signal to the second base station. The time difference of arrival is used to position the terminal device.

In a possible design, the first channel measurement information is channel measurement information of a first channel, and the first channel is a channel between the terminal device and the first base station.

In a possible design, that the first channel measurement information is used to determine the time difference of arrival between the frequency-hopping positioning reference signal to the first base station and the frequency-hopping positioning reference signal to the second base station includes: The first channel measurement information is used to determine an inter-channel phase difference between the first base station and the second base station; and the inter-channel phase difference is used to determine the time difference of arrival between the frequency-hopping positioning reference signal to the first base station and the frequency-hopping positioning reference signal to the second base station.

In a possible design, the first channel measurement information may include at least one of the following: a frequency domain estimate of the first channel, a time domain estimate of the first channel, or a phase estimate of the first channel.

In a possible design, the inter-channel phase difference is a product of the frequency domain estimate of the first channel and a conjugate of the frequency domain estimate of the second channel; or the inter-channel phase difference is a ratio of the frequency domain estimate of the first channel to the frequency domain estimate of the second channel; or the inter-channel phase difference is a convolution of the time domain estimate of the first channel and the time domain estimate of the second channel; or the inter-channel phase difference is a correlation sequence of the time domain estimate of the first channel and the time domain estimate of the second channel; or the inter-channel phase difference is a difference between the phase estimate of the first channel and the phase estimate of the second channel. At least one of the frequency domain estimate of the second channel, the time domain estimate of the second channel, or the phase estimate of the second channel is the second channel measurement information. The second channel measurement information is determined based on the frequency-hopping positioning reference signal received by the second base station from the terminal device.

In a possible design, the second channel measurement information is channel measurement information of the second channel, and the second channel is a channel between the terminal device and the second base station.

In a possible design, the transceiver unit may be further configured to receive configuration information of the frequency-hopping positioning reference signal from the location server.

In a possible design, the configuration information of the frequency-hopping positioning reference signal may include at least one of the following: a frequency hopping interval, a bandwidth corresponding to the positioning reference signal in a frequency hop, a frequency hopping period, or a quantity of frequency hops.

In a possible design, the transceiver unit may be further configured to receive a measurement request from the location server. The measurement request indicates the first base station to perform a positioning measurement based on the frequency-hopping positioning reference signal.

According to a fourth aspect, this application further provides a communication apparatus. The communication apparatus may be a first apparatus. The communication apparatus has functions of implementing the first apparatus in the first aspect or possible design examples of the first aspect.

In a possible design, a structure of the communication apparatus includes a processor, and optionally, further includes a transceiver and/or a memory. The transceiver is configured to: receive and send a message, and communicate and interact with another device in a system. The processor is configured to support the communication apparatus in performing functions corresponding to the first apparatus in the first aspect or the possible design examples of the first aspect. The memory is coupled to the processor, and stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the functions corresponding to the first apparatus in the first aspect or the possible design examples of the first aspect.

According to a fifth aspect, this application further provides a communication apparatus. The communication apparatus may be a first apparatus. The communication apparatus has functions of implementing the first base station in the first aspect or possible design examples of the first aspect.

In a possible design, a structure of the communication apparatus includes a processor, and optionally, further includes a transceiver and/or a memory. The transceiver is configured to: receive and send a message, and communicate and interact with another device in a system. The processor is configured to support the communication apparatus in performing functions corresponding to the first base station in the first aspect or the possible design examples of the first aspect. The memory is coupled to the processor, and stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the functions corresponding to the first base station in the first aspect or the possible design examples of the first aspect.

According to a sixth aspect, an embodiment of this application provides a communication system. The communication system may include the first base station, the second base station, the location server, and the like mentioned above.

According to a seventh aspect, an embodiment of this application provides a computer-readable storage medium. The computer-readable storage medium stores program instructions. When the program instructions are run on a computer, the computer is enabled to perform the method according to the first aspect and any one of the possible designs of the first aspect in embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to an eighth aspect, an embodiment of this application provides a computer program product, including instructions. When the instructions are run on a computer, the method according to the first aspect and any one of the possible designs of the first aspect is performed.

According to a ninth aspect, this application further provides a chip, including a processor. The processor is coupled to a memory, and is configured to read and execute program instructions stored in the memory, so that the chip implements the method according to the first aspect or any one of the possible designs of the first aspect.

For each of the second aspect to the ninth aspect and technical effects that may be achieved in each of the second aspect to the ninth aspect, refer to descriptions of the technical effects that may be achieved in the first aspect or possible solutions in the first aspect. Details are not described herein again.

### BRIEF DESCRIPTION OF DRAWINGS

FIG. 1 is a diagram of an architecture of a communication system according to this application;
FIG. 2 is a schematic flowchart of a communication method according to this application;
FIG. 3 is a diagram of a curve of an inter-channel phase difference versus a subcarrier index in a frequency domain according to this application;
FIG. 4 is a flowchart of an example of a communication method according to this application;
FIG. 5 is a flowchart of another example of a communication method according to this application;
FIG. 6 is a flowchart of still another example of a communication method according to this application;
FIG. 7 is a diagram of a structure of a communication apparatus according to this application; and
FIG. 8 is a diagram of a structure of a communication apparatus according to this application.

### DESCRIPTION OF EMBODIMENTS

The following further describes in detail this application with reference to accompanying drawings.

Embodiments of this application provide a communication method and apparatus, to improve positioning accuracy. The method and the apparatus in this application are based on a same technical concept. Because problem-resolving principles of the method and the apparatus are similar, mutual reference may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

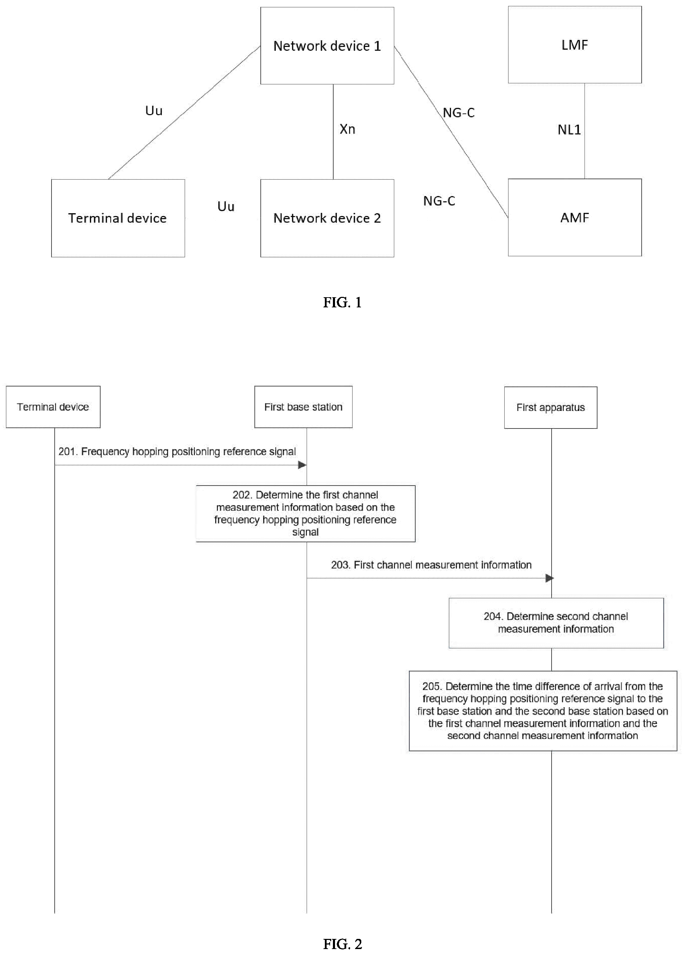

For example, FIG. 1 shows an architecture of a communication system to which a communication method according to an embodiment of this application is applicable. The communication system may include a terminal device, a network device, a core network device, and the like. For example, in FIG. 1, two network devices (for example, a network device 1 and a network device 2), and the core network device including an access and mobility management function (access and mobility management function, AMF) network element, a location server (or referred to as a location management function) (location management function, LMF), and the like, are used for description. It should be understood that a quantity and a type of devices shown in FIG. 1 are not intended to limit this application.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a hand-held device or a vehicle-mounted device that has a wireless connection function. Currently, the terminal device may be: a cellular phone (cellular phone), a smartphone (smartphone), a wireless data card, a personal digital assistant (personal digital assistant, PDA) computer, a mobile phone (mobile phone), a tablet computer, a notebook computer, a palmtop computer, a wireless modem (modem), a laptop computer (laptop computer), a mobile internet device (mobile internet device, MID), a wearable device, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may alternatively be a D2D terminal device, a V2X communication terminal device, an intelligent vehicle, an in-vehicle infotainment system (or referred to as a vehicle-to-everything system) (telematics box, TBOX), a machine-to-machine/machine-type communication (machine-to-machine/machine-type communication, M2M/MTC) terminal device, or an internet of things (internet of things, IoT) terminal device. For example, the terminal device may be a carrier such as a vehicle, a ship, or an aircraft, a terminal-type roadside unit, or a communication module or chip built in the vehicle or the roadside unit. For example, the terminal device may be a vehicle-mounted module. If the various terminal devices described above are in a vehicle, for example, placed in the vehicle or mounted in the vehicle, the terminal devices may all be considered as vehicle-mounted terminal devices. For example, the vehicle-mounted terminal devices are also referred to as on-board units (on-board units, OBUs).

As an example instead of a limitation, in embodiments of this application, the terminal device may alternatively be the wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without relying on smartphones, for example, smart watches or smart glasses, and include devices that focus only on a specific type of application function and need to be used together with other devices such as smartphones, for example, various smart bands, smart helmets, or smart jewelry for monitoring physical signs.

Alternatively, the terminal device may be an intelligent device like an amusement device or a smart appliance, or an uncrewed aerial vehicle.

In this application, the terminal device may alternatively be a functional module, a chip, or a chip system. Optionally, the functional module, the chip, or the chip system may be disposed in the terminal device.

The network device may be a device that provides access for the terminal device. The network device may include a radio access network (radio access network, RAN) device, for example, a base station. The network device may alternatively be a device that communicates with the terminal device through an air interface. The network device may include an evolved NodeB (evolved NodeB, eNB or e-NodeB for short) in a long term evolution (long term evolution, LTE) system or long term evolution-advanced (long term evolution-advanced, LTE-A). The eNB is an apparatus that is deployed in a radio access network and that satisfies the fourth generation (fourth generation, 4G) mobile communication technology standard and that provides a wireless communication function for the terminal device. The network device may alternatively be a new radio controller (new radio controller, NR controller), a new radio base station, a remote radio module, a micro base station (also referred to as a small cell), a relay (relay), a macro base station in various forms, a transmission-reception point (transmission-reception point, TRP), a transmission measurement function (transmission measurement function, TMF), a transmission point (transmission point, TP), or any other radio access device. This is not limited in this embodiment of this application. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a wireless fidelity (wireless fidelity, Wi-Fi) access point (access point, AP), a baseband unit pool (BBU pool) and an RRU in a cloud radio access network (cloud radio access network, CRAN), or the like. The network device may alternatively be a next-generation NodeB (gNodeB, gNB) in a 5G mobile communication system, a base station in a future mobile communication system, an access node in a wireless local area network (wireless fidelity, Wi-Fi) system, or the like, or may alternatively be an access network device in an open access network (open RAN, ORAN) system, or the like.

In addition, the network device may alternatively be a module or a unit that completes some functions of the base station. Optionally, the functional module, the chip, or the chip system may be disposed in the network device. For example, the network device may be a central unit (central unit, CU), a distributed unit (distributed unit, DU), a CU-control plane (control plane, CP), a CU-user plane (user plane, UP), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP). In different systems, the CU (or the CU-CP and the CU-UP), the DU, or the RU may alternatively have different names, but a person skilled in the art may understand meanings thereof. For example, in the ORAN system, the CU may also be referred to as an open (open, O)-CU, the DU may also be referred to as an open (open, O)-DU, the CU-CP may also be referred to as an open (open, O)-CU-CP, the CU-UP may also be referred to as an open (open, O)-CUP-UP, and the RU may also be referred to as an open (open, O)-RU.

In this application, the network device may alternatively be a central processing element (central processing element, CPE), a router, or the like.

A specific technology and a specific device form used by the network device are not limited in embodiments of this application. For example, the network device may correspond to an eNB in a 4G system, and correspond to the gNB in the 5G system.

The LMF is an apparatus or component deployed in the core network to provide a positioning function for the terminal device. The LMF may implement location estimation for the terminal device.

The terminal device communicates with the network device through a Uu link. Network devices communicate with each other through an Xn interface. The network device communicates with the AMF through a next-generation control plane (next-generation control plane, NG-C) interface. The AMF is equivalent to a router for communication between the network device and the LMF. The AMF communicates with the LMF through a network location interface 1 (network location 1, NL1) interface.

Embodiments of this application may be applied to a positioning scenario in which a positioning reference signal is sent through frequency hopping. Due to a limitation of a hardware capability of the terminal device in a scenario such as a passive internet of things scenario, it cannot be ensured that initial phases of clocks are consistent each time when the positioning reference signal is sent through frequency hopping. Each time when the positioning reference signal is sent through frequency hopping, a random phase error is caused, which may reduce positioning accuracy. Based on this, an embodiment of this application provides a communication method, to resolve a problem that positioning accuracy is reduced due to the random phase error caused when the positioning reference signal is sent through frequency hopping.

In this embodiment of this application, an operation performed by any apparatus or device may also be performed by a processor, a chip, a functional module, or the like in the any apparatus or device. This is not limited in this application. For example, the following operations performed by a first apparatus may also be performed by a processor, a chip, a functional module, or the like in the first apparatus. Other devices are similar and are not described one by one.

Based on the foregoing descriptions, this embodiment of this application provides a communication method. As shown in FIG. 2, a procedure of the method may include the following steps:
Step 201: A first base station receives a frequency-hopping positioning reference signal from a terminal device.

The first base station may be a positioning reference base station. In other words, another base station participating in positioning uses the first base station as the positioning reference base station. It should be understood that there may be a plurality of other base stations participating in positioning.

For example, the terminal device may send the positioning reference signal to the first base station on different time domain symbols through frequency hopping based on scheduling of the first base station.

Certainly, the terminal device may send the positioning reference signal to the other base stations participating in positioning on different time domain symbols through frequency hopping based on scheduling of the other base stations participating in positioning. The following uses an example in which the other base stations participating in positioning include a second base station for description. It should be understood that the other base stations participating in positioning may further include another base station, for example, a third base station. Herein, only the second base station is used as an example for description. This does not constitute a limitation on this application. Principles of the another base station and the second base station are similar, and mutual reference may be made to each other.

Optionally, the positioning reference signal may be a positioning reference signal (positioning reference signal, PRS), a sounding reference signal (sounding reference signal, SRS), or the like.

In an optional implementation, before the first base station and the second base station receive the frequency-hopping positioning reference signal, the first base station and the second base station may receive configuration information of the frequency-hopping positioning reference signal from a location server.

Optionally, the configuration information of the frequency-hopping reference signal may include required attribute information of the frequency-hopping positioning reference signal, for example, a frequency hopping interval, a bandwidth corresponding to each frequency-hopping positioning reference signal, a frequency hopping period, and a quantity of frequency hops corresponding to one complete frequency hopping transmission.

In some embodiments, the location server may send a positioning information request to the first base station. The positioning information requests the first base station to feed back resource information of the frequency-hopping positioning reference signal of the terminal device. The first base station allocates, to the terminal device, a time-frequency resource used for sending the frequency-hopping positioning reference signal, based on a scheduling algorithm and the required attribute information of the frequency-hopping positioning reference signal included in the configuration information of the frequency-hopping positioning reference signal. Then, the first base station sends configuration information of the uplink frequency-hopping positioning reference signal of the terminal device to the location server. The configuration information of the uplink frequency-hopping positioning reference signal of the terminal device includes the time-frequency resource for the frequency-hopping positioning reference signal.

Further, the location server forwards the configuration information of the uplink frequency-hopping positioning reference signal of the terminal device to the second base station, so that the second base station determines time-frequency resources on which a measurement of the frequency-hopping positioning reference signal is to be performed.

Optionally, the location server activates the terminal device to send the positioning reference signal, so that the terminal device subsequently sends the positioning reference signal through frequency hopping. For example, the location server triggers the first base station to send scheduling information to the terminal device, to schedule the terminal device to send the frequency-hopping positioning reference signal.

Before the terminal device sends the frequency-hopping positioning reference signal to the first base station and the second base station, the location server may send a measurement request to the first base station and the second base station. The measurement request indicates the first base station and the second base station to perform a positioning measurement based on the frequency-hopping positioning reference signal.

Step 202: The first base station determines first channel measurement information based on the frequency-hopping positioning reference signal.

The first channel measurement information may be channel measurement information of a first channel, and the first channel is a channel between the terminal device and the first base station.

In an optional implementation, after receiving the frequency-hopping positioning reference signal, the first base station may splice the received frequency-hopping positioning reference signal, and then perform channel estimation on the spliced signal to obtain the first channel measurement information.

In another optional implementation, after receiving the frequency-hopping positioning reference signal, the first base station performs channel estimation on the frequency-hopping reference signal, and then splices estimated channels to obtain the first channel measurement information.

For example, an example in which the positioning reference signal sent by the terminal device on N symbols through frequency hopping is s' = [s₁e^{jφ₁,} s₂e^{jφ₂}, ···, sₙe^{jφ_{N}}] is used for description, where N is an integer greater than or equal to 2, and n represents a channel frequency index corresponding to an n^{th} frequency hopping transmission. For example, n may correspond to a channel on which an n^{th} resource block (resource block, RB) is located. φ₁, φ₂, ···, φ_{N} indicates a random phase difference caused by the terminal device each time when frequency hopping transmission is performed.

A channel **hₘ** from the terminal device to a base station m may satisfy the following formula 1:
${h}_{m} = \left[\left|{h}_{m , 1}\right|{e}^{{jθ}_{m , 1}},\left|{h}_{m , 2}\right|{e}^{{jθ}_{m , 2}},⋯,\left|{h}_{m , n}\right|{e}^{{jθ}_{m , n}},⋯,\left|{h}_{m , N}\right|{e}^{{jθ}_{m , N}}\right]$

Herein, m represents a base station number. For example, the first base station may correspond to a base station 1 (that is, m is 1). This is not limited in this application. |h_{m,n}|e^{jθ_{m,n}} represents an amplitude and a phase that are corresponding to the channel from the terminal device to the base station m. θ indicates a phase corresponding to the channel.

A positioning reference signal **yₘ** received by the base station m through N frequency hops may be represented by using the following formula 2:
${y}_{m} = \left[{s}_{1}\left|{h}_{m , 1}\right|{e}^{{jθ}_{m , 1}}{e}^{{jφ}_{1}},{s}_{2}\left|{h}_{m , 2}\right|{e}^{{jθ}_{m , 2}}{e}^{{jφ}_{2}},⋯,{s}_{n}\left|{h}_{m , n}\right|{e}^{{jθ}_{m , n}}{e}^{{jφ}_{n}},⋯,{s}_{N}\left|{h}_{m , N}\right|{e}^{{jθ}_{m , N}}{e}^{{jφ}_{N}}\right]$

Correspondingly, it may be obtained that a channel estimate **ĥₘ** corresponding to the base station m may satisfy the following formula 3:
${\hat{h}}_{m} = \frac{{y}_{m}}{s ′} \left[\left|{h}_{m , 1}\right|{e}^{{jθ}_{m , 1}}{e}^{{jφ}_{1}},\left|{h}_{m , 2}\right|{e}^{{jθ}_{m , 2}}{e}^{{jφ}_{2}},⋯,\left|{h}_{m , n}\right|{e}^{{jθ}_{m , n}}{e}^{{jφ}_{n}},⋯,\left|{h}_{m , N}\right|{e}^{{jθ}_{m , N}}{e}^{{jφ}_{N}}\right]$

It can be learned from the formula 3 that a random initial phase [e^{jφ₁}, ··· , e^{jφ_{N}}] introduced on a terminal device side is added to both a signal **yₘ** received by the base station m and an estimated channel **ĥₘ**.

The first channel measurement information includes at least one of the following: a frequency domain estimate of the first channel, a time domain estimate of the first channel, or a phase estimate of the first channel.

The frequency domain estimate of the first channel may be ĥ₁. The frequency domain estimate of the first channel may also be understood as a channel frequency response (channel frequency response, CFR) of the first channel. The time domain estimate of the first channel may be a channel impulse response (channel impulse response, CIR) of the first channel or a time-domain phase CIR of the first channel.

A phase estimate of the base station m may be [e^{jθ_{m,1}}e^{jφ₁}, e^{jθ_{m,2}}e^{jφ₂}, ··· , e^{jθ_{m,n}}e^{jφₙ}, ··· , e^{jθ_{m,N}}e^{jφ_{N}}]. Correspondingly, the phase estimate of the first channel may be [*e^{jθ_{1,1}}e^{jφ₁}, e^{jθ_{1,2}}e^{jφ₂},* ··· , e^{jθ_{1,n}}e^{jφₙ}, ··· , *e^{jθ_{1,N}}e^{jφ_{N}}*].

Step 203: The first base station sends the first channel measurement information to a first apparatus. Correspondingly, the first apparatus receives the first channel measurement information from the first base station.

Optionally, the first channel measurement information may be sent at an RB level, or may be sent at a subcarrier level. This is not limited in this application.

In an optional implementation, based on different cases of the first apparatus, the following scenarios may exist:
Scenario a1: The first apparatus may be a second base station.

In the scenario a1, when the first apparatus (namely, the second base station) receives the first channel measurement information from the first base station, the following methods may be included:
Method b1: The second base station directly receives the first channel measurement information from the first base station.

In the method b1, after determining the first channel measurement information of the first base station, the first base station may send the first channel measurement information to the second base station.

Optionally, the first base station may send the first channel measurement information to the second base station by the first base station, or by an O-DU of the first base station, or by an O-RU of the first base station. This is not limited in this application.

Method b2: The second base station receives the first channel measurement information from the first base station through the location server.

In the method b2, after determining the first channel measurement information of the first base station, the first base station can send the first channel measurement information to the location server, so that the location server can forward the first channel measurement information to the second base station.

Scenario a2: The first apparatus may be the location server. In this case, that is, the first base station sends the first channel measurement information to the location server.

Step 204: The first apparatus determines second channel measurement information.

The second channel measurement information may be channel measurement information of a second channel, and the second channel is a channel between the terminal device and the second base station.

For example, the second channel measurement information may include at least one of the following: a frequency domain estimate of the second channel, a time domain estimate of the second channel, or a phase estimate of the second channel.

Similar to the first base station, after receiving the frequency-hopping positioning reference signal, the second base station may splice the received frequency-hopping positioning reference signal, and then perform channel estimation on the spliced signal to obtain the second channel measurement information. Alternatively, after receiving the frequency-hopping positioning reference signal, the second base station performs channel estimation on the frequency-hopping reference signal, and then splices estimated channels to obtain the second channel measurement information. For a specific process of determining the second channel measurement information by the second base station, refer to related descriptions in step 202. Details are not described herein again.

In an optional implementation, based on different cases of the first apparatus in step 203, determining, by the first apparatus, the second channel measurement information may include:

Corresponding to the foregoing scenario a1, when the first apparatus is the second base station, the second base station receives the frequency-hopping positioning reference signal from the terminal device, and determines the second channel measurement information based on the frequency-hopping positioning reference signal. For details, refer to the foregoing method for determining the second channel measurement information by the second base station.

For the foregoing scenario a2, when the first apparatus is the location server, the location server receives the second channel measurement information from the second base station.

In the scenario a2, after determining the second channel measurement information, the second base station sends the second channel measurement information to the location server.

Step 205: The first apparatus determines a time difference of arrival between the frequency-hopping positioning reference signal to the first base station and the frequency-hopping positioning reference signal to the second base station based on the first channel measurement information and the second channel measurement information. The time difference of arrival is used to position the terminal device.

In an optional implementation, the first apparatus may determine an inter-channel phase difference between the first base station and the second base station based on the first channel measurement information and the second channel measurement information. In this way, the first apparatus determines the time difference of arrival between the frequency-hopping positioning reference signal to the first base station and the frequency-hopping positioning reference signal to the second base station based on the inter-channel phase difference between the first base station and the second base station.

A random phase is introduced on the terminal device side, but the random initial phase of each frequency hopping transmission is the same for different base stations. Therefore, differencing between the base stations may be used to eliminate the error.

In the foregoing scenario a1, after obtaining the first channel measurement information and the second channel measurement information, the second base station may further determine the inter-channel phase difference between the first base station and the second base station.

In the foregoing scenario a2, after obtaining the first channel measurement information and the second channel measurement information, the location server may further determine the inter-channel phase difference between the first base station and the second base station.

A process in which the second base station or the location server determines the inter-channel phase difference may be understood as performing channel differencing between the base stations.

For example, the second base station determines the inter-channel phase difference between the first base station and the second base station. For example, a base station m+1 (assumed as the second base station) receives the channel measurement information **ĥₘ**, sent by the base station m (assumed as the first base station), and a differential channel between the base station m and the second base station m+1 may be represented as ${Δh}_{m}^{m + 1}$. Because an inter-channel phase difference between the base station m and the base station m+1, with respect to the frequency-hopping positioning reference signal from the terminal device, represent a time difference of arrival between the terminal device and the two base stations, the differential channel (namely, the inter-channel phase difference) ${Δh}_{m}^{m + 1}$ includes phase difference information about the channel between the terminal device and the base station m and a channel between the terminal device and the base station m+1.

Optionally, the inter-channel phase difference may be represented in the following plurality of manners. In the following manners, an example in which the base station m is the first base station and the base station m+1 is the second base station is used for description:

Manner c1: The inter-channel phase difference may be a product of the frequency domain estimate of the first channel and a conjugate of the frequency domain estimate of the second channel.

For example, in the manner c1, the inter-channel phase difference ${Δh}_{m}^{m + 1}$ may satisfy the following formula 4: $\begin{matrix}{Δh}_{m}^{m + 1} = {\hat{h}}_{m + 1} {\hat{h}}_{m}^{∗} = \\ \left[\left|{h}_{m + 1 , 1}\right|\left|{h}_{m , 1}\right|{e}^{j \left({θ}_{m + 1 , 1}-{θ}_{m , 1}\right)},\left|{h}_{m + 1 , 2}\right|\left|{h}_{m , 2}\right|{e}^{j \left({θ}_{m + 1 , 2}-{θ}_{m , 2}\right)},⋯,\left|{h}_{m + 1 , N}\right|\left|{h}_{m , N}\right|{e}^{j \left({θ}_{m + 1 , N}-{θ}_{m , N}\right)}\right]\end{matrix}$

**ĥₘ₊₁** represents the frequency domain estimate of the second channel, and ${\hat{h}}_{m}^{∗}$ represents a conjugate of the frequency domain estimate **ĥₘ** of the first channel.

Manner c2: The inter-channel phase difference may be a ratio of the frequency domain estimate of the first channel to the frequency domain estimate of the second channel.

For example, in the manner c2, the inter-channel phase difference ${Δh}_{m}^{m + 1}$ may satisfy the following formula 5:
${Δh}_{m}^{m + 1} = \frac{{\hat{h}}_{m + 1}}{{\hat{h}}_{m}} = \left[\frac{\left|{h}_{m + 1 , 1}\right|}{\left|{h}_{m , 1}\right|}{e}^{j \left({θ}_{m + 1 , 1}-{θ}_{m , 1}\right)},\frac{\left|{h}_{m + 1 , 2}\right|}{\left|{h}_{m , 2}\right|}{e}^{j \left({θ}_{m + 1 , 2}-{θ}_{m , 2}\right)},⋯,\frac{\left|{h}_{m + 1 , N}\right|}{\left|{h}_{m , N}\right|}{e}^{j \left({θ}_{m + 1 , N}-{θ}_{m , N}\right)}\right]$

Manner c3: The inter-channel phase difference may be a convolution of the time domain estimate of the first channel and the time domain estimate of the second channel.

For example, in the manner c3, the inter-channel phase difference ${F}^{- 1} \left\{Δ{h}_{m}^{m + 1}\right\}$ may satisfy the following formula 6:
${F}^{- 1} \left\{Δ{h}_{m}^{m + 1}\right\} = {F}^{- 1} \left\{{\hat{h}}_{m + 1}\right\} ∗ {F}^{- 1} \left\{{\hat{h}}_{m}\right\}$

Herein, ${F}^{- 1} \left\{{Δh}_{m}^{m + 1}\right\}$ is a time domain form of $Δ {h}_{m}^{m + 1}$ , **ĥₘ₊₁** is a time domain form of 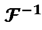 **{ĥₘ₊₁},** and 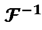 **{ĥₘ}** is a time domain form of **ĥₘ.** * represents a convolution operation.

Manner c4: The inter-channel phase difference may be a correlation sequence between the time domain estimate of the first channel and the time domain estimate of the second channel.

Manner c5: The inter-channel phase difference may be a difference between the phase estimate of the first channel and the phase estimate of the second channel.

For example, in the manner c5, the inter-channel phase difference $Δ {h}_{m}^{m + 1}$ may satisfy the following formula 7:
${Δh}_{m}^{m + 1} = \left[{e}^{{jθ}_{m + 1 , 1} - {jθ}_{m , 1}}, {e}^{{jθ}_{m + 1 , 2} - {jθ}_{m , 2}}, ⋯, {e}^{{jθ}_{m + 1 , N} - {jθ}_{m , N}}\right]$

It can be learned from the foregoing plurality of manners that the inter-channel phase difference is a phase difference in a frequency domain, and is equal to a phase difference between the channel from the terminal device to the base station m+1 and the channel between the terminal device and the base station m in the frequency domain. In this way, the random phase error caused by the terminal device is eliminated.

In the foregoing scenario a1, when the first apparatus is the second base station, after determining the time difference of arrival, the second base station can send the time difference of arrival to the location server, so that the location server can perform positioning of the terminal device based on the time difference of arrival.

In the foregoing scenario a2, when the first apparatus is the location server, after determining the time difference of arrival, the location server performs positioning of the terminal device based on the time difference of arrival.

For example, when the location server performs positioning of the terminal device, a trilateration positioning method or the like may be used.

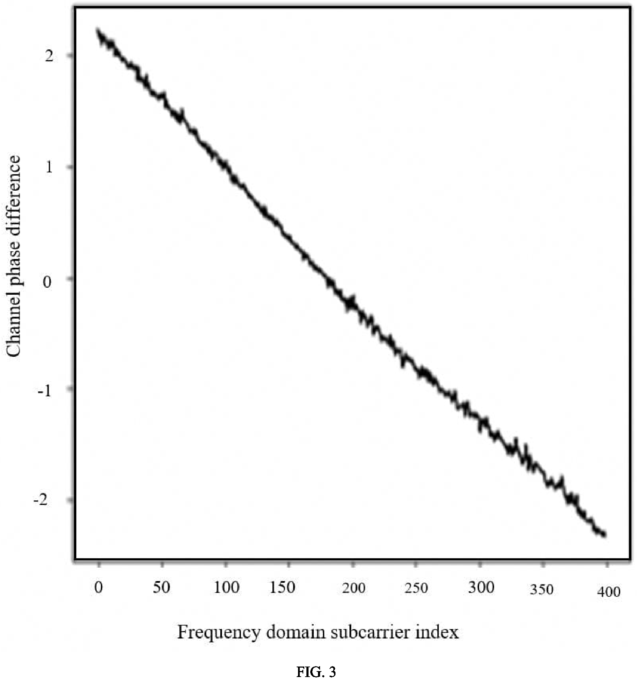

For example, FIG. 3 is a diagram of a curve of the inter-channel phase difference versus a subcarrier index in the frequency domain. A curve slope corresponds to a time difference of arrival of an uplink frequency-hopping positioning reference signal between two base stations, namely, a TDOA. Therefore, if the inter-channel phase difference is a phase difference between channels from the terminal device to two base stations in the frequency domain, TDOA estimation can be completed, and positioning can be ultimately completed.

Through the foregoing communication method, the time difference of arrival between the frequency-hopping reference signal to the first base station and the frequency-hopping reference signal to the second base station is determined based on the inter-channel phase difference between the first base station and the second base station. This can eliminate a phase error caused by the frequency-hopping positioning reference signal of the terminal device, thereby ensuring positioning accuracy.

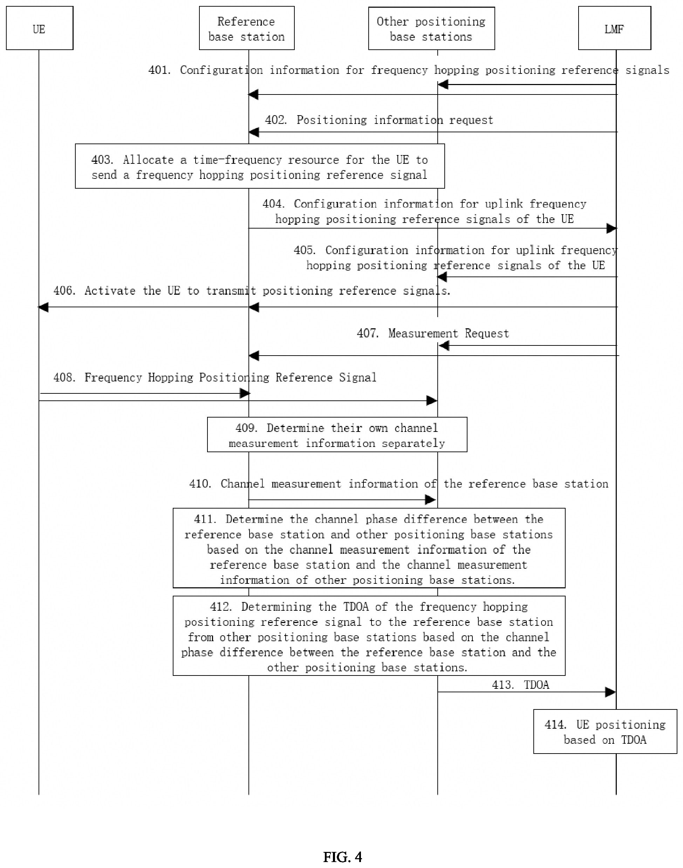

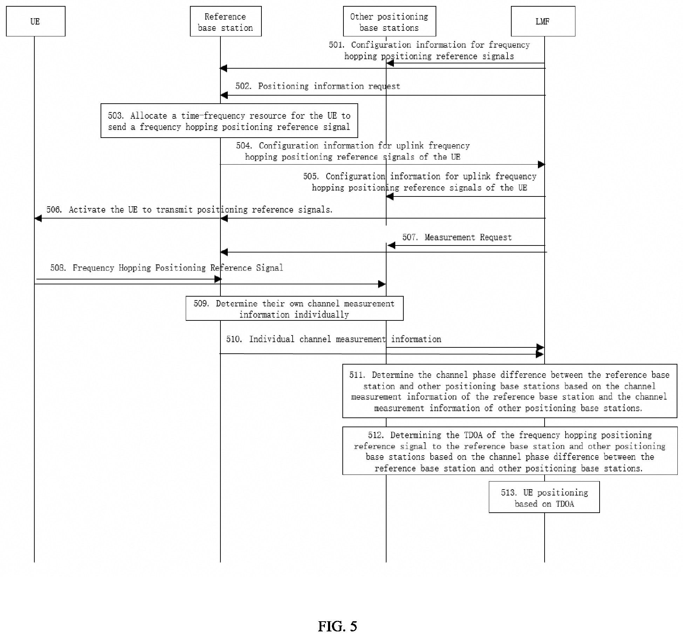

Based on the foregoing embodiment, the following describes in detail the communication method according to this embodiment of this application by using examples shown in FIG. 4 and FIG. 5. In the following examples, the terminal device is UE, the other base stations participating in positioning includes a plurality of base stations including the second base station, the plurality of base stations are referred to as another positioning base station (which may also be referred to as a measurement base station or the like) below, the first base station is referred to as a reference base station, and the location server is an LMF.

For example, FIG. 4 shows an example of a communication method. In this example, the reference base station sends channel measurement information of the reference base station based on a frequency-hopping positioning signal to the another positioning base station. The another positioning base station performs differencing on channel measurement information of the another positioning base station and the channel measurement information sent by the reference base station, and estimates, based on a differential value, a TDOA between the another positioning base station and the reference base station. With reference to FIG. 4, a procedure of the example may include the following steps:

Step 401: The LMF sends the configuration information of the frequency-hopping positioning reference signal to the reference base station and the another positioning base station.

For related descriptions of the configuration information of the frequency-hopping positioning reference signal, refer to related descriptions in the embodiment shown in FIG. 2. Details are not described herein again.

Step 402: The LMF sends a positioning information request to the reference base station. The positioning information requests the first base station to feed back the resource information of the frequency-hopping positioning reference signal of the terminal device.

Step 403: The reference base station allocates, to the UE, the time-frequency resource used for sending the frequency-hopping positioning reference signal.

For example, the reference base station allocates, to the UE, the time-frequency resource used for sending the frequency-hopping positioning reference signal, based on the scheduling algorithm and the required attribute information of the frequency-hopping positioning reference signal included in the configuration information of the frequency-hopping positioning reference signal.

Step 404: The reference base station sends configuration information of an uplink frequency-hopping positioning reference signal of the UE to the LMF.

Step 404 is used to respond to step 402.

For related descriptions of the configuration information of the uplink frequency-hopping positioning reference signal of the UE, refer to related descriptions in the embodiment shown in FIG. 2. Details are not described herein again.

Step 405: The LMF sends the configuration information of the uplink frequency-hopping positioning reference signal of the UE to the another positioning base station.

Step 406: The LMF activates the UE to send a positioning reference signal, so that the terminal device subsequently sends the positioning reference signal through frequency hopping.

For example, the LMF triggers the reference base station to send scheduling information to the UE, to schedule the UE to send the frequency-hopping positioning reference signal.

Step 407: The LMF sends a measurement request to the reference base station and the another positioning base station. The measurement request indicates the reference base station and the another positioning base station to perform a positioning measurement based on the frequency-hopping positioning reference signal.

Step 408: The UE sends the frequency-hopping positioning reference signal to the reference base station and the another positioning base station.

Step 409: The reference base station and the another positioning base station separately determine their channel measurement information.

The channel measurement information determined by the reference base station is channel measurement information (for example, the foregoing first channel measurement information) of a channel between the terminal device and the reference base station, and the channel measurement information determined by the another positioning base station is the channel measurement information (for example, the foregoing second channel measurement information) of a channel between the terminal device and the another positioning base station.

Specifically, for related descriptions of the channel measurement information and a method for determining channel measurement information by each base station, refer to related descriptions in the embodiment shown in FIG. 2. Details are not described herein again.

Step 410: The reference base station sends the channel measurement information of the reference base station to the another positioning base station.

Optionally, the reference base station may send the channel measurement information of the reference base station to the another positioning base station by the reference base station, or by an O-DU of the reference base station, or by an O-RU of the reference base station. This is not limited in this application.

Step 411: The another positioning base station determines an inter-channel phase difference between the reference base station and the another positioning base station based on the channel measurement information of the reference base station and the channel measurement information of the another positioning base station.

For example, for a manner of determining the inter-channel phase difference, refer to related descriptions in the embodiment shown in FIG. 2. Details are not described herein again.

Step 412: The another positioning base station determines a TDOA between the frequency-hopping positioning reference signal to the reference base station and the frequency-hopping positioning reference signal to the another positioning base station based on the inter-channel phase difference between the reference base station and the another positioning base station.

Step 413: The another positioning base station sends the TDOA to the LMF.

Step 414: The LMF performs positioning of the UE based on the TDOA.

Based on this example, the reference base station sends the measurement channel information of the reference base station to the another positioning base station, and the another positioning base station estimates the TDOA by using a difference between a channel from the terminal device to the another positioning base station and a channel from the terminal device to the reference base station. This eliminates an impact of a phase error caused by frequency hopping of the terminal device, thereby ensuring positioning accuracy.

FIG. 5 shows another example of the communication method. In this example, the reference base station and the another positioning base station send, to the LMF, the channel measurement information determined by the reference base station and the channel measurement information determined by the another positioning base station respectively based on the frequency-hopping positioning signal. The LMF estimates an inter-station TDOA by using a differential channel between the another positioning base station and the reference base station, to implement UE positioning. With reference to FIG. 5, a procedure of the example may include the following steps:

Step 501 to step 509 are similar to step 401 to step 409, and mutual reference may be made to these steps. Details are not described herein again.

Step 510: The reference base station and another positioning base station send their respective channel measurement information to the LMF.

The channel measurement information of the reference base station is channel measurement information (for example, the foregoing first channel measurement information) of a channel between the terminal device and the reference base station, and the channel measurement information of the another positioning base station is the channel measurement information (for example, the foregoing second channel measurement information) of a channel between the terminal device and the another positioning base station.

Step 511: The LMF determines the inter-channel phase difference between the reference base station and the another positioning base station based on the channel measurement information of the reference base station and the channel measurement information of the another positioning base station.

For example, for the manner of determining the inter-channel phase difference, refer to related descriptions in the embodiment shown in FIG. 4. Details are not described herein again.

Step 512: The LMF determines the TDOA between the frequency-hopping positioning reference signal to the reference base station and the frequency-hopping positioning reference signal to the another positioning base station based on the inter-channel phase difference between the reference base station and the another positioning base station.

Step 513: The LMF performs positioning of the UE based on the TDOA.

Based on this example, the reference base station and the another positioning base station separately report the frequency-hopping measurement channel information to the LMF, and the LMF estimates the TDOA based on the inter-channel difference between the reference base station and the another positioning base station. This eliminates an impact of a phase error caused by frequency hopping on a UE side, thereby ensuring positioning accuracy.

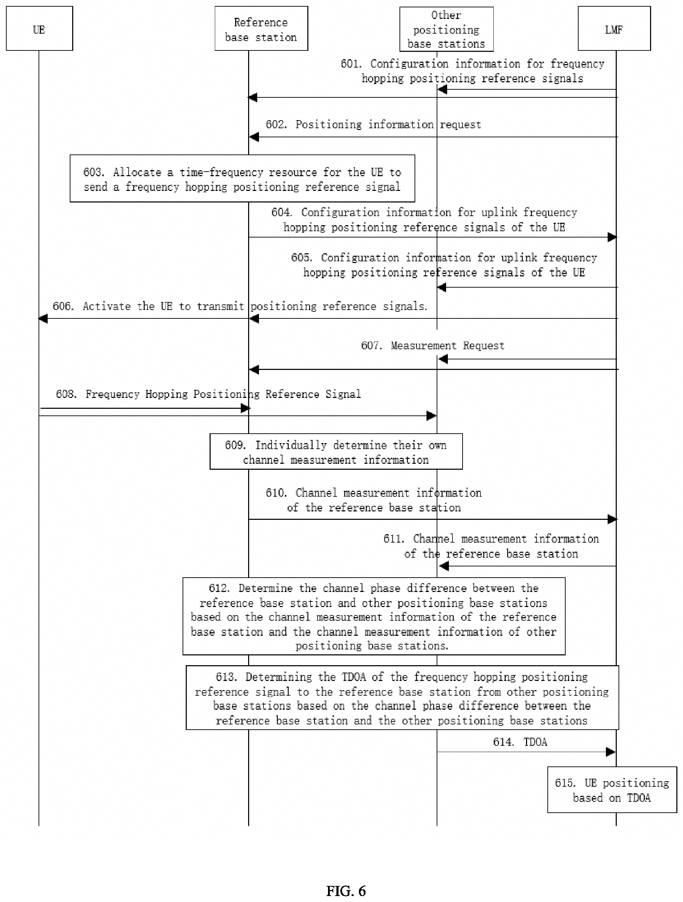

FIG. 6 shows another example of the communication method. In this example, the reference base station sends the channel measurement information determined by the reference base station based on the frequency-hopping positioning reference signal to the LMF. The LMF delivers the channel measurement information reported by the reference base station to the another positioning base station. The another positioning base station estimates the inter-station TDOA by using the differential channel between the another positioning base station and the reference base station, and reports the TDOA to the LMF, to implement UE positioning. With reference to FIG. 6, a procedure of the example may include the following steps:

Step 601 to step 609 are similar to step 401 to step 409, and mutual reference may be made to these steps. Details are not described herein again.

Step 610: The reference base station sends the channel measurement information of the reference base station to the LMF.

The channel measurement information of the reference base station is the channel measurement information (for example, the foregoing first channel measurement information) of the channel between the terminal device and the reference base station.

Step 611: The LMF sends the channel measurement information of the reference base station to the another positioning base station.

Step 612: The another positioning base station determines the inter-channel phase difference between the reference base station and the another positioning base station based on the channel measurement information of the reference base station and the channel measurement information of the another positioning base station.

The channel measurement information of the another positioning base station is the channel measurement information (for example, the foregoing second channel measurement information) of the channel between the terminal device and the another positioning base station.

For example, for the manner of determining the inter-channel phase difference, refer to related descriptions in the embodiment shown in FIG. 2. Details are not described herein again.

Step 613: The another positioning base station determines the TDOA between the frequency-hopping positioning reference signal to the reference base station and the frequency-hopping positioning reference signal to the another positioning base station based on the inter-channel phase difference between the reference base station and the another positioning base station.

Step 614: The another positioning base station sends the TDOA to the LMF.

Step 615: The LMF performs positioning of the UE based on the TDOA.

Based on this example, the reference base station reports the measurement channel information to the LMF, the LMF delivers the channel measurement information of the reference base station to the another positioning base station, and the another positioning base station estimates the TDOA based on the inter-channel difference between the another positioning base station and the reference base station. This eliminates the impact of the phase error caused by frequency hopping on the UE side, thereby ensuring positioning accuracy.

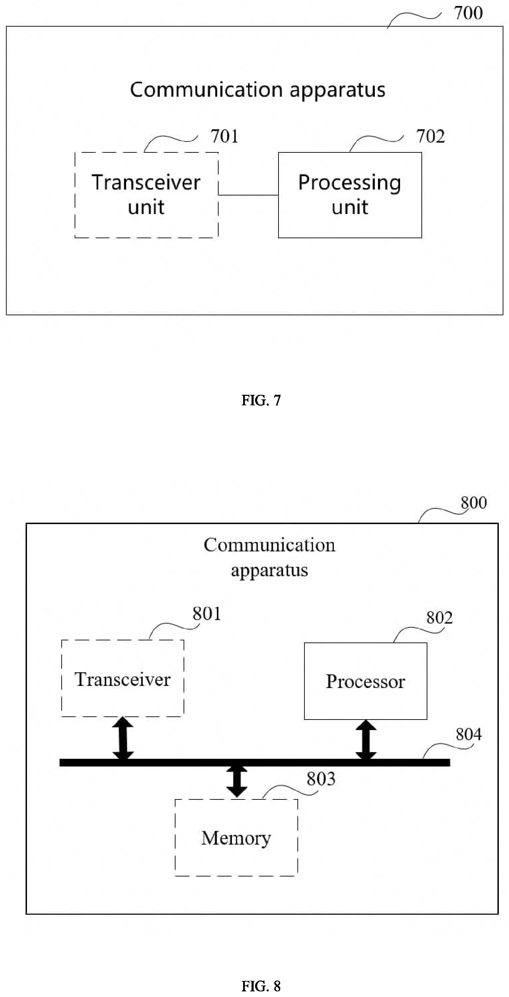

Based on the foregoing embodiments, an embodiment of this application further provides a communication apparatus. As shown in FIG. 7, a communication apparatus 700 may include a processing unit 702. Optionally, the communication apparatus 700 may further include a transceiver unit 701. The transceiver unit 701 is used by the communication apparatus 700 to receive a signal (information, data, or the like) or send a signal (information, data, or the like). The processing unit 702 is configured to control and manage an action of the communication apparatus 700. The processing unit 702 may further control steps performed by the transceiver unit 701.

Optionally, the transceiver unit 701 may include a receiving unit and/or a sending unit. The receiving unit may be used by the communication apparatus 700 to receive a signal (information, data, or the like), and the sending unit may be used by the communication apparatus 700 to send a signal (information, data, or the like). The sending unit may send a signal (information, data, or the like) under control of the processing unit 702, and the receiving unit may receive a signal (information, data, or the like) under control of the processing unit 702.

Optionally, the communication apparatus 700 may include the sending unit, but does not include the receiving unit. Alternatively, the communication apparatus 700 may include the receiving unit, but does not include the sending unit. This specifically depends on whether the foregoing solution performed by the communication apparatus 700 includes a sending action and/or a receiving action.

For example, the communication apparatus 700 may be specifically the first apparatus in the foregoing embodiments, a processor, a chip, or a chip system, or a functional module in the first apparatus; or the communication apparatus 700 may be specifically the first base station in the foregoing embodiments, a processor, a chip, or a chip system, or a functional module in the first base station.

In an embodiment, when the communication apparatus 700 is configured to implement a function of the first apparatus in the foregoing embodiments, the processing unit 702 is configured to perform the following operations: determining first channel measurement information and second channel measurement information, where a first base station is a positioning reference base station, the first channel measurement information is determined based on a frequency-hopping positioning reference signal received by the first base station from a terminal device, and the second channel measurement information is determined based on the frequency-hopping positioning reference signal received by a second base station from the terminal device; and determining a time difference of arrival between the frequency-hopping reference signal to the first base station and the frequency-hopping reference signal to the second base station based on the first channel measurement information and the second channel measurement information, where the time difference of arrival is used to position the terminal device.

Optionally, based on the first channel measurement information and the second channel measurement information, the processing unit 702 may be configured to: determine an inter-channel phase difference between the first base station and the second base station based on the first channel measurement information and the second channel measurement information; and determine the time difference of arrival between the frequency-hopping reference signal to the first base station and the frequency-hopping reference signal to the second base station based on the inter-channel phase difference between the first base station and the second base station.

In an optional implementation, the communication apparatus 700 is the second base station. The second base station may further include the transceiver unit 701. When determining the first channel measurement information, the processing unit 702 is configured to: control the transceiver unit 701 to receive the first channel measurement information from the first base station; or control the transceiver unit 701 to receive the first channel measurement information from a location server. The first channel measurement information is from the first base station.

When determining the second channel measurement information, the processing unit 702 is configured to: control the transceiver unit 701 to receive the frequency-hopping positioning reference signal from the terminal device; and determine the second channel measurement information based on the frequency-hopping positioning reference signal.

Optionally, the transceiver unit 701 is further configured to send the time difference of arrival to the location server.

For example, the transceiver unit 701 is further configured to receive configuration information of the frequency-hopping positioning reference signal from the location server.

In some embodiments, the transceiver unit 701 is further configured to receive a measurement request from the location server. The measurement request indicates the first apparatus to perform a positioning measurement based on the frequency-hopping positioning reference signal.

In another optional implementation, the communication apparatus 700 is a location server. The location server may further include the transceiver unit 701. When determining the first channel measurement information and the second channel measurement information, the processing unit 702 is configured to: control the transceiver unit 701 to receive the first channel measurement information from the first base station, and receive the second channel measurement information from the second base station.

Optionally, the transceiver unit 701 is further configured to send configuration information of the frequency-hopping positioning reference signal to the first base station and the second base station.

For example, the transceiver unit 701 is further configured to send a measurement request to the first base station and the second base station. The measurement request indicates the first base station and the second base station to perform the positioning measurement based on the frequency-hopping positioning reference signal.

In an example, the configuration information of the frequency-hopping positioning reference signal includes at least one of the following: a frequency hopping interval, a bandwidth corresponding to the positioning reference signal in a frequency hop, a frequency hopping period, or a quantity of frequency hops.

For example, the first channel measurement information includes at least one of the following: a frequency domain estimate of the first channel, a time domain estimate of the first channel, or a phase estimate of the first channel. The second channel measurement information includes at least one of the following: a frequency domain estimate of the second channel, a time domain estimate of the second channel, or a phase estimate of the second channel.

In some embodiments, the inter-channel phase difference is a product of the frequency domain estimate of the first channel and a conjugate of the frequency domain estimate of the second channel; or the inter-channel phase difference is a ratio of the frequency domain estimate of the first channel to the frequency domain estimate of the second channel; or the inter-channel phase difference is a convolution of the time domain estimate of the first channel and the time domain estimate of the second channel; or the inter-channel phase difference is a correlation sequence of the time domain estimate of the first channel and the time domain estimate of the second channel; or the inter-channel phase difference is a difference between the phase estimate of the first channel and the phase estimate of the second channel.

In an embodiment, when the communication apparatus 700 is configured to implement a function of the first base station in the foregoing embodiments: The transceiver unit 701 is configured to receive the frequency-hopping positioning reference signal from the terminal device; the first base station is the positioning reference base station; the processing unit 702 is configured to determine the first channel measurement information based on the frequency-hopping positioning reference signal; the transceiver unit 701 is further configured to send the first channel measurement information to the second base station or the location server; the first channel measurement information is used to determine the time difference of arrival between the frequency-hopping positioning reference signal to the first base station and the frequency-hopping positioning reference signal to the second base station; and the time difference of arrival is used to position the terminal device.

Optionally, that the first channel measurement information is used to determine the time difference of arrival between the frequency-hopping positioning reference signal to the first base station and the frequency-hopping positioning reference signal to the second base station includes: The first channel measurement information is used to determine the inter-channel phase difference between the first base station and the second base station; and the inter-channel phase difference is used to determine the time difference of arrival between the frequency-hopping positioning reference signal to the first base station and the frequency-hopping positioning reference signal to the second base station.

For example, the first channel measurement information includes at least one of the following: a frequency domain estimate of the first channel, a time domain estimate of the first channel, or a phase estimate of the first channel.

In some embodiments, the inter-channel phase difference is a product of the frequency domain estimate of the first channel and a conjugate of the frequency domain estimate of the second channel; or the inter-channel phase difference is a ratio of the frequency domain estimate of the first channel to the frequency domain estimate of the second channel; or the inter-channel phase difference is a convolution of the time domain estimate of the first channel and the time domain estimate of the second channel; or the inter-channel phase difference is a correlation sequence of the time domain estimate of the first channel and the time domain estimate of the second channel; or the inter-channel phase difference is a difference between the phase estimate of the first channel and the phase estimate of the second channel. At least one of the frequency domain estimate of the second channel, the time domain estimate of the second channel, or the phase estimate of the second channel is the second channel measurement information. The second channel measurement information is determined based on the frequency-hopping positioning reference signal received by the second base station from the terminal device.

Optionally, the transceiver unit 701 is further configured to receive the configuration information of the frequency-hopping positioning reference signal from the location server.

In an example, the configuration information of the frequency-hopping positioning reference signal includes at least one of the following: the frequency hopping interval, the bandwidth corresponding to the positioning reference signal in a frequency hop, the frequency hopping period, or the quantity of frequency hops.

In an optional manner, the transceiver unit 701 is further configured to receive a measurement request from the location server. The measurement request indicates the first base station to perform a positioning measurement based on the frequency-hopping positioning reference signal.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 8, a communication apparatus 800 may include a processing unit 802. Optionally, the communication apparatus 800 may further include a transceiver 801 and/or a memory 803. The memory 803 may be disposed inside the communication apparatus 800, or may be disposed outside the communication apparatus 800. The processor 802 may control the transceiver 801 to receive and send a signal, a message, information, data, or the like.

Optionally, the transceiver 801 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 802. The receiver receives a signal, a message, information, data, or the like under control of the processor 802.

Specifically, the processor 802 may be a central processing unit (central processing unit, CPU), a network processor (network processor, NP), or a combination of a CPU and an NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 801, the processor 802, and the memory 803 are connected to each other. Optionally, the transceiver 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes an application program stored in the memory 803, to implement the foregoing function, thereby implementing a function of the communication apparatus 800.

For example, the communication apparatus 800 may be specifically the first apparatus in the foregoing embodiments, or may be the first base station in the foregoing embodiments. Alternatively, the communication apparatus 800 may be a chip or the like.

In an embodiment, when the communication apparatus 800 implements a function of the first apparatus in the foregoing embodiments, the transceiver 801 may implement receiving and sending operations performed by the first apparatus in the foregoing embodiments; and the processor 802 may implement an operation other than the receiving and sending operations performed by the first apparatus in the foregoing embodiments. Specifically, for related specific descriptions, refer to related descriptions in the foregoing embodiments. Details are not described herein again.

In an embodiment, when the communication apparatus 800 implements a function of the first base station in the foregoing embodiments, the transceiver 801 may implement receiving and sending operations performed by the first base station in the foregoing embodiments; and the processor 802 may implement an operation other than the receiving and sending operations performed by the first base station in the foregoing embodiments. Specifically, for related specific descriptions, refer to related descriptions in the foregoing embodiments. Details are not described herein again.

Optionally, when the communication apparatus 800 is a chip, and the chip implements a function of the first apparatus in the foregoing embodiments, an input/output interface may implement the receiving and sending operations performed by the first apparatus in the foregoing embodiments; and the processor 802 may implement an operation other than the receiving and sending operations performed by the first apparatus in the foregoing embodiments. Specifically, for related specific descriptions, refer to related descriptions in the foregoing embodiments. Details are not described herein again.

Optionally, when the communication apparatus 800 is a chip, and the chip implements a function of the first base station in the foregoing embodiments, an input/output interface may implement the receiving and sending operations performed by the first base station in the foregoing embodiments; and the processor 802 may implement an operation other than the receiving and sending operations performed by the first apparatus in the foregoing embodiments. Specifically, for related specific descriptions, refer to related descriptions in the foregoing embodiments. Details are not described herein again.

Based on the foregoing embodiments, an embodiment of this application provides a communication system. The communication system may include the first base station, the second base station, the location server, and the like in the foregoing embodiments.

An embodiment of this application further provides a computer-readable storage medium. The computer-readable storage medium is configured to store a computer program. When the computer program is executed by a computer, the computer may implement the communication method according to the foregoing method embodiments.

An embodiment of this application further provides a computer program product. The computer program product is configured to store a computer program. When the computer program is executed by a computer, the computer may implement the communication method according to the foregoing method embodiments.

An embodiment of this application further provides a chip, including a processor. The processor is configured to enable the chip to implement the communication method according to the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first base station, a frequency-hopping positioning reference signal from a terminal device, wherein the first base station is a positioning reference base station;
determining, by the first base station, first channel measurement information based on the frequency-hopping positioning reference signal;
sending, by the first base station, the first channel measurement information to a first apparatus;
determining, by the first apparatus, second channel measurement information, wherein the second channel measurement information is determined based on the frequency-hopping positioning reference signal received by the second base station from the terminal device; and
determining, by the first apparatus, a time difference of arrival between the frequency-hopping reference signal to the first base station and the frequency-hopping reference signal to the second base station based on the first channel measurement information and the second channel measurement information, wherein the time difference of arrival is used to position the terminal device.

2. The method according to claim 1, wherein the first apparatus is the second base station, and sending, by the first base station, the first channel measurement information to the first apparatus comprises:
directly sending, by the first base station, the first channel measurement information to the second base station; or sending, by the first base station, the first channel measurement information to the second base station through a location server; and
determining, by the first apparatus, the second channel measurement information comprises:
receiving, by the second base station, the frequency-hopping positioning reference signal from the terminal device; and
determining, by the second base station, the second channel measurement information based on the frequency-hopping positioning reference signal.

3. The method according to claim 2, wherein the method further comprises:
sending, by the second base station, the time difference of arrival to the location server.

4. The method according to claim 2 or 3, wherein the method further comprises:
sending, by the location server, configuration information of the frequency-hopping positioning reference signal to the second base station.

5. The method according to any one of claims 2 to 4, wherein the method further comprises:
sending, by the location server, a measurement request to the second base station, wherein the measurement request indicates the second base station to perform a positioning measurement based on the frequency-hopping positioning reference signal.

6. The method according to claim 1, wherein the first apparatus is a location server, and determining, by the first apparatus, the second channel measurement information comprises:
receiving, by the location server, the second channel measurement information from the second base station.

7. The method according to claim 6, wherein the method further comprises:
sending, by the location server, configuration information of the frequency-hopping positioning reference signal to the first base station and the second base station.

8. The method according to claim 6 or 7, wherein the method further comprises:
sending, by the location server, a measurement request to the first base station and the second base station, wherein the measurement request indicates the first base station and the second base station to perform a positioning measurement based on the frequency-hopping positioning reference signal.

9. The method according to claim 4 or 7, wherein the configuration information of the frequency-hopping positioning reference signal comprises at least one of the following: a frequency hopping interval, a bandwidth corresponding to the positioning reference signal in a frequency hop, a frequency hopping period, or a quantity of frequency hops.

10. The method according to any one of claims 1 to 9, wherein determining, by the first apparatus, the time difference of arrival between the frequency-hopping reference signal to the first base station and the frequency-hopping reference signal to the second base station based on the first channel measurement information and the second channel measurement information comprises:
determining, by the first apparatus, an inter-channel phase difference between the first base station and the second base station based on the first channel measurement information and the second channel measurement information; and
determining, by the first apparatus, the time difference of arrival between the frequency-hopping reference signal to the first base station and the frequency-hopping reference signal to the second base station based on the inter-channel phase difference between the first base station and the second base station.

11. The method according to claim 10, wherein the first channel measurement information comprises at least one of the following: a frequency domain estimate of a first channel, a time domain estimate of the first channel, or a phase estimate of the first channel; and
the second channel measurement information comprises at least one of the following: a frequency domain estimate of a second channel, a time domain estimate of the second channel, or a phase estimate of the second channel.

12. The method according to claim 11, wherein the inter-channel phase difference is a product of the frequency domain estimate of the first channel and a conjugate of the frequency domain estimate of the second channel; or the inter-channel phase difference is a ratio of the frequency domain estimate of the first channel to the frequency domain estimate of the second channel; or
the inter-channel phase difference is a convolution of the time domain estimate of the first channel and the time domain estimate of the second channel; or
the inter-channel phase difference is a correlation sequence between the time domain estimate of the first channel and the time domain estimate of the second channel; or
the inter-channel phase difference is a difference between the phase estimate of the first channel and the phase estimate of the second channel.

13. A communication apparatus, comprising:
a processing unit, configured to perform the following operations:
determining first channel measurement information and second channel measurement information, wherein the first base station is a positioning reference base station, the first channel measurement information is determined based on a frequency-hopping positioning reference signal received by the first base station from a terminal device, and the second channel measurement information is determined based on the frequency-hopping positioning reference signal received by a second base station from the terminal device; and
determining a time difference of arrival between the frequency-hopping reference signal to the first base station and the frequency-hopping reference signal to the second base station based on the first channel measurement information and the second channel measurement information, wherein the time difference of arrival is used to position the terminal device.

14. The apparatus according to claim 13, wherein the communication apparatus is the second base station, the second base station further comprises a transceiver unit, and the transceiver unit is configured to perform communication; and
when determining the first channel measurement information, the processing unit is configured to:
control the transceiver unit to receive the first channel measurement information from the first base station; or control the transceiver unit to receive the first channel measurement information from a location server, and the first channel measurement information is from the first base station; and
when determining the second channel measurement information, the processing unit is configured to:
control the transceiver unit to receive the frequency-hopping positioning reference signal from the terminal device; and
determine the second channel measurement information based on the frequency-hopping positioning reference signal.

15. The apparatus according to claim 14, wherein the transceiver unit is further configured to:
send the time difference of arrival to the location server.

16. The apparatus according to claim 13, wherein the communication apparatus is a location server, the location server further comprises a transceiver unit, and the transceiver unit is configured to perform communication; and
when determining the first channel measurement information and the second channel measurement information, the processing unit is configured to:
control the transceiver unit to receive the first channel measurement information from the first base station, and receive the second channel measurement information from the second base station.

17. The apparatus according to any one of claims 13 to 16, wherein when determining the time difference of arrival between the frequency-hopping reference signal to the first base station and the frequency-hopping reference signal to the second base station based on the first channel measurement information and the second channel measurement information, the processing unit is configured to:
determine an inter-channel phase difference between the first base station and the second base station based on the first channel measurement information and the second channel measurement information; and
determine the time difference of arrival between the frequency-hopping reference signal to the first base station and the frequency-hopping reference signal to the second base station based on the inter-channel phase difference between the first base station and the second base station.

18. A communication apparatus, comprising:
a transceiver unit, configured to receive a frequency-hopping positioning reference signal from a terminal device, wherein a first base station is a positioning reference base station; and
a processing unit, configured to determine first channel measurement information based on the frequency-hopping positioning reference signal, wherein
the transceiver unit is further configured to send the first channel measurement information to a second base station or a location server; and
the first channel measurement information is used to determine a time difference of arrival between the frequency-hopping positioning reference signal to the first base station and the second base station, and the time difference of arrival is used to position the terminal device.

19. A communication system, comprising the communication apparatus according to any one of claims 13 to 17 and the communication apparatus according to claim 18.

20. A computer-readable storage medium, wherein the computer-readable storage medium stores computer-executable instructions, and when the computer-executable instructions are invoked by the computer, the method according to any one of claims 1 to 12 is performed.

21. A chip, comprising a processor, wherein the processor is configured to perform the method according to any one of claims 1 to 12.
